# EUROPEAN PATENT SPECIFICATION

(11) **EP 1 258 642 B1**
(45) Date of publication and mention of the grant of the patent: **15.06.2011**
(21) Application number: 02445047.0
(22) Date of filing: 11.04.2002
(51) Int. Cl.: G01M 13/04, F16C 19/52, F16C 35/00, G01P 1/02, G01P 3/44

(54) **Bearing housing with measurement device**
Lagergehäuse mit einer Messvorrichtung
Logement de palier muni d'un dispositif de mesure

(30) Priority: 12.04.2001 SE 0101315
(43) Date of publication of application: 20.11.2002
(73) Proprietor: Aktiebolaget SKF, 415 50 Göteborg (SE)
(72) Inventor: Eriksson, Reijo, 641 47 Katrineholm (SE); Richardsson, Leif, 641 96 Katrineholm (SE); Premberg, Daniel, 415 01 Göteborg (SE); Salsland, Helmut, 440 06 Grabo (SE)
(74) Representative: Westman, Per Börje Ingemar

(56) References cited:
- EP-A- 0 668 494
- GB-A- 1 604 861
- US-A- 4 255 163
- US-A- 4 464 935
- US-A- 5 140 849
- US-A- 5 183 340
- US-A- 5 381 692
- US-A- 5 509 310
- US-A- 5 585 577
- US-A- 5 669 717
- US-A- 5 691 707
- US-A- 6 007 250
- US-A- 6 116 089
- US-B1- 6 191 513
- PATENT ABSTRACTS OF JAPAN vol. 006, no. 241 (P-158), 30 November 1982 (1982-11-30) & JP 57 139628 A (MITSUBISHI DENKI KK), 28 August 1982 (1982-08-28)
- PATENT ABSTRACTS OF JAPAN vol. 006, no. 241 (P-158), 30 November 1982 (1982-11-30) & JP 57 139629 A (MITSUBISHI DENKI KK), 28 August 1982 (1982-08-28)

## Description

The present invention refers to a bearing housing with a measurement device, in accordance with the preamble of the accompanying claim 1.

In many different applications of bearings supporting rotary loads, it is of great interest to know not only the rotational speed of the rotating shaft supported in a bearing disposed in a bearing housing, but also other parameters influencing the function of the bearing, and/or indicating the condition of the bearing. Such other parameters are temperature and vibration. It is necessary to position a temperature sensing device inside the bearing housing as it is the actual internal temperature, which is of importance. It is also convenient to position an appropriate measuring device for recording the rotational speed inside the bearing housing as the rotating bearing race ring and the shaft are available therein and the sensor and the measuring device will have a comparatively protected position therein. Probably mostly for space reasons, vibration sensors have not been located inside the bearing housing, but they have instead been positioned externally on the outside of the bearing housing, either on top of the bearing housing or on the upper side of the bearing housing base, where they can be fitted at especially prepared surfaces permitting correct positioning of the sensors in relation to the shaft. However, this earlier used positioning of the vibration sensors have some drawbacks, and mainly due the fact that the sensors are positioned thus that they project somewhat outside the rigid bearing housing wall and therefore might be subjected to influence from the surroundings, such as impacts, humidity and dirt.

The bearing housings in question can be of the type having a lower part with a base portion on which is arranged a lower half of a bearing housing with an internal bearing seat, and with end openings for a shaft, and with an upper bearing housing half being connectable to the lower part by bolts. The base portion of the lower bearing housing half is equipped with bolt holes for fitting of the bearing housing to a frame. The lower side of the bearing housing base in recent years has been provided with cavities opening towards the bottom of the base portion. The purpose of such cavities is primarily to reduce weight, but due to the fact that the lower side of the bearing housing base has not a continuous surface contacting the bedding or frame to which the housing shall be attached, the problem with leveling an area of the same size as that of the bearing housing base is eliminated.

The closest prior art - US-A-5 509 310 - relates to a two part bearing housing for a hydrodynamic or a hydrostatic bearing with a measurement device with at least two sensors arranged to detect vibrations of a shaft rotatably supported in a sliding bearing in the housing, which measurement device is arranged to communicate with external data collecting and/or processing means. This bearing housing comprises an upper half, and a lower bearing housing half, and the sensors are arranged inside the very bearing housing itself and fitted to a liner having a Babbit layer in sliding contact with the shaft. Thus this bearing housing is equipped with sensors in a bearing component, which could be compared to an outer ring of a rolling bearing, and the position of the portion of this bearing component is inside the upper bearing housing half.

US-A-5 140 849 refers to a rolling bearing with a sensor unit disposed on a circumferential surface of a fixed ring of the bearing. This means that it is necessary to machine such a notched portion in the bearing ring.

US-A-4 464 935 refers to an evaluator for shaft vibrations at a fluid film journal bearing, and it is silent about a bearing housing, and even if a bearing housing was provided for the bearing, there is nothing in this patent which specifies where the sensors should be so positioned.

The purpose of the present invention is now to propose a bearing housing with a measurement device for sensing vibration, which eliminates the above drawbacks, and this is achieved in that the bearing housing is arranged in accordance with the features defined in the accompanying claim 1.

Hereinafter, the invention will be further described and elucidated by way of a preferred, but non-limiting embodiment shown in the accompanying drawings.

Fig. 1 shows in a perspective view obliquely from above a lower half of a bearing housing, illustrating a retainer for supporting speed sensor and temperature sensor inside the bearing housing.

Fig. 2 is a perspective view obliquely from the bottom of the lower half of the bearing housing and showing the positioning of a retainer for supporting vibration sensors in a cavity in the lower side of the bearing housing base.

Fig. 3 is a larger scale view of a portion of the bearing housing base shown in Fig. 2 with the retainer for the vibration sensors.

Fig. 4 is a short end perspective view of the retainer as shown in Fig. 2 and 3.

Fig. 5 is a perspective side view showing the retainer obliquely from two longitudinal sides and the end side opposite to that shown in Fig. 4, and also one of two vibration sensors to be inserted in the retainer.

Fig. 6 shows the retainer in schematic, X-ray-like views from the end seen in Fig. 4 and, Figs. 7 and 8 are cross-sectional view along line VII-VII and line VIII-VIII in Fig. 6, respectively.

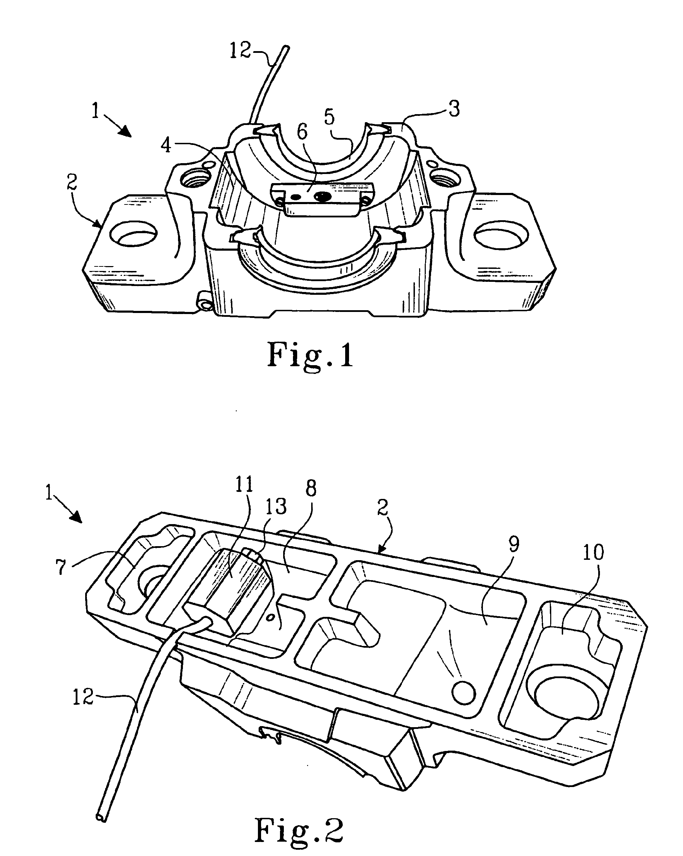

Fig. 1 shows obliquely the lower half 1 of a bearing housing having a base portion 2 and a substantially semi-cylindrical bowl-shaped main part 3 projecting upwards from the base portion and having a semi-cylindrical bearing seat 4, for supporting the outer ring of a rolling bearing and two opposed semi-circular end openings 5 for passage of a shaft to be supported in the bearing. On the inside of the housing wall adjacent the bearing seat 4 is provided a first retainer 6 arranged to receive sensors for detecting the speed at which the shaft rotates and/or the current temperature in the bearing housing. The readings from these sensors are preferably transferred via cable or in any other appropriate way to not shown data collecting instruments or control units.

Fig. 2 shows in a perspective view from the bottom the bearing housing half 1. As can be seen from this view, the bottom of the base portion 2 is provided with a number of cavities 7, 8, 9 10, which are primarily made for reducing weight but also for reducing the foot area with which the bearing housing base has to be in contact with a frame or the like to which the bearing housing shall be fitted, thereby also reducing the requirement of treatment of the frame surface for levelling it.
In one of these cavities 8 is shown a second retainer 11, attached to the wall of the cavity 8, and being connected via a cable 12 to a not shown data collecting and/or processing unit. As can be seen the retainer 11 is so positioned in the recessed cavity 8, that it is situated completely inside the bottom plane of the base member 2. This retainer is intended for supporting a number of vibration sensors or accelerometers, e.g. MONITRAN 134319 or other comparative sensors available on the market, the retainer thereby incorporating at least two such sensors arranged at known relative directions towards each other, and preferably perpendicularly to each other.

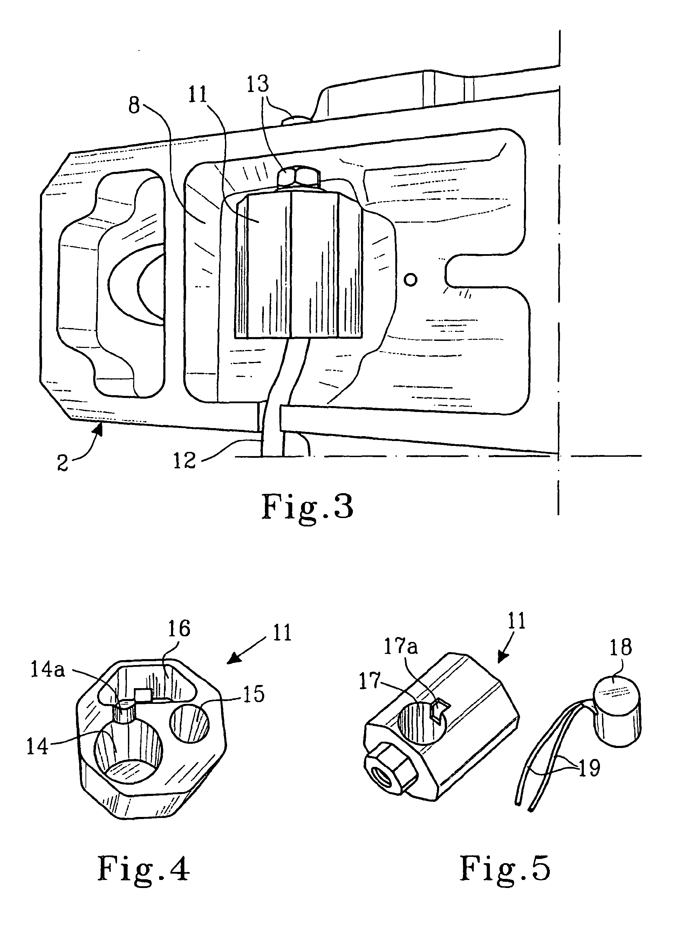

As can be seen in Fig. 3, which in bigger scale shows a portion of the bearing housing base portion 2 from below, the retainer 11 is detachably attached to the wall of the cavity 8 with aid of a screw 13. Here it can also be seen that the retainer 11 is shaped as an elongated parallelepiped and has its short side attached against a longitudinal wall of the housing cavity, whereby it is ascertained that the retainer is positioned with its main extensions perpendicularly against the longitudinal side of the bearing housing and in parallel therewith, respectively.
Fig. 4 shows in an end view one end of the retainer 11 illustrated e.g. in Fig. 3. As can be seen in this view the retainer 11, which is preferably made from plastic material, in the preferred embodiment illustrated has the form of a hexagonal rod, with three recesses extending axially into the rod from this end. A first recess 14 formed as a cylindrical bore, is intended to receive a vibration sensor or accelerometer formed as a cylindrical body and e.g. of the type described above. A second, smaller recess 15, is intended to house the cable 12, whereas the third recess 16, in this embodiment with a cross section of a truncated triangle, is intended to contain a printed circuit board (PCB) arranged to drive the sensors contained in the retainer 11. A groove 14a is recessed between the first 14 and third recess 16 for passage of conduits interconnecting the first vibration sensor with the PCB.

In Fig. 5 the same retainer 11 as shown in Fig. 4 is shown in perspective from the opposite end side and from the long side of the retainer positioned on top in Fig. 4. From this view can be seen that the retainer 11 in this long side has a fourth recess 17 arranged at right angles to the first recess 14, and like that recess being made as a cylindrical bore and intended to house a second vibration sensor or accelerometer, e.g. of the MONITRAN type mentioned above. As can be seen the wall of the forth recess 17 has a smaller opening 17a for accommodating conduits between the accelerometer and the PCB in the third recess 16. This figure also shows, partly hidden behind the retainer 11, an accelerometer 18 with conduits 19, and of the type to fit into the first and fourth recesses 14, 17 in the retainer. The bore for the screw 13 is not shown in this figure, but it is understood that it shall be present in this side face of the retainer.

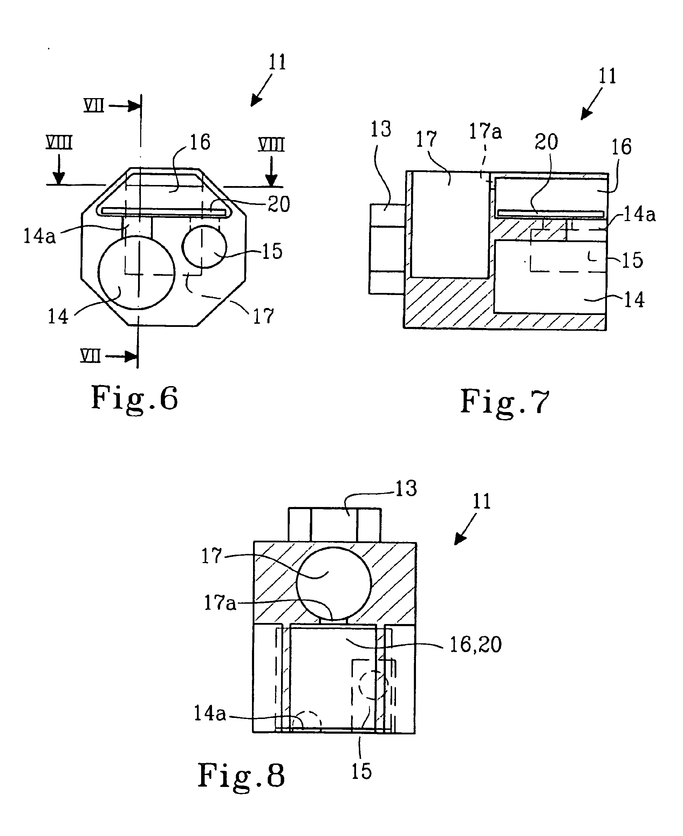

Fig. 6 - 8 show schematically different views of the retainer 11 according to the inventions, whereby Fig. 6 is an end view from the same end as shown in Fig. 4, whereby however the relation between the different recesses and details in the retainer are illustrated in X-ray mode. Fig. 7 shows the retainer 11 in a side view, and Fig. 8 in a view from above, whereby the presentations are made in the same manner as in Fig. 6. In these figures the PCB positioned in the third recess 16 is also shown at 20.

The function of the accelerometers 18 is known per se, and by the positioning of the at least two vibration sensors or accelerometers 18 perpendicularly against each other it is obtained readings detecting vibrations in two opposed directions, i.e. axially by the sensor in the first recess 14 and radially by the sensor in the fourth recess 17. By using a recessed free space in the cavities under the base portion of the bearing housing, which primarily are intended for other purposes, and which have been used for such other purposes for several years, it is obtained a protected positioning for the retainer and the sensors and PCB contained therein. By this positioning of the vibration sensing means in the present, concealed area outside the bearing housing, the retainer will not intrude on the limited space in the interior of the bearing housing, and furthermore it is easy to position the retainer with its incorporated sensors thus that the sensors can safely detect vibrations in axial and radial directions of the bearing housing.

The invention is not limited to the embodiment shown in the accompanying drawings and described in connection thereto, but modifications and variations are possible within the scope of the accompanying claims.

## Claims

1. A bearing housing having a lower part (1) with a base portion (2) and an upper part connectable to said lower part, which lower and upper parts in interconnected position together forming a space for an Internal seat (4) for an other race ring of a bearing, and having a measurement device incorporating at least two vibration sensors (18), arranged to detect vibrations of a shaft rotatably supported in a bearing in the bearing housing, and which vibration sensors being arranged to detect vibrations in two perpendicularly opposed directions and to communicate with external data collecting and/or processing means, and which lower part (1) of the bearing housing is of the type, which for weight reducing reasons is provided with recessed cavities (7, 8, 9, 10) positioned outside the space forming the internal seat and opening in a direction away from the interior space,
**characterized therein,**
that the vibration sensors (18) are positioned in one such recessed cavity (8) in the lower part (1) of the bearing housing in a completely recessed manner.

2. A bearing housing with a measurement device as claimed in claim 1,
**characterized therein,**
that the vibration sensors (18) are arranged in a retainer (11) detachably attachable to a side wall of said cavity (8).

3. A bearing housing with a measurement device as claimed in claim 2,
**characterized therein,**
that the retainer (11) has a first recess (14) arranged to receive a first one of said vibration sensors and a further recess (17) positioned perpendicularly to the first recess and arranged to receive a second vibration sensor, said recesses (14, 17) being dimensioned and shaped to retain the sensors in a non-movable manner.

4. A bearing housing with a measurement device as claimed in claim 2 or 3,
**characterized therein,**
that the retainer (11) has a recess (15) for receiving a cable (12) for communication with said external data collecting and/or processing means and a recess (16) for a printed circuit board (20) arranged to drive the sensors (18).

5. A bearing housing with a measurement device as claimed in claim 4,
**characterized therein,**
that the retainer (11) is a parallel-epipedic structure attachable to a wall of said cavity (8) in the bearing housing base portion (2) In a manner positioning the vibration sensors (18) in radial and axial directions in relation to the bearing housing.

## Patentansprüche

1. Lagergehäuse mit einem einen Basisabschnitt (2) aufweisenden unteren Teil (1) und einem oberen Teil, der mit dem unteren Teil verbunden werden kann, wobei der untere und der obere Teil in miteinander verbundener Stellung zusammen einen Raum für einen inneren Sitz (4) für einen anderen Laufring eines Lagers bilden, und mit einer Messvorrichtung, die mindestens zwei Schwingungssensoren (18) enthält, die zur Erfassung von Schwingungen einer drehbar in einem Lager im Lagergehäuse gestützten Welle angeordnet sind, und wobei die Schwingungssensoren zur Erfassung von Schwingungen in zwei senkrecht entgegengesetzten Richtungen und zur Verbindung mit externen Datenerfassungs- und/oder -verarbeitungsmitteln angeordnet sind, und wobei der untere Teil (1) des Lagergehäuses jener Art ist, die aus Gewichtsreduzierungsgründen mit ausgesparten Hohlräumen (7, 8, 9, 10) versehen ist, die außerhalb des den inneren Sitz bildenden Raums positioniert sind und in einer von dem Innenraum weg verlaufenden Richtung münden,
**dadurch gekennzeichnet, dass**
die Schwingungssensoren (18) in einem solchen ausgesparten Hohlraum (8) im unteren Teil (1) des Lagergehäuses auf vollständig zurückgesetzte Weise positioniert sind.

2. Lagergehäuse mit einer Messvorrichtung nach Anspruch 1,
**dadurch gekennzeichnet, dass**
die Schwingungssensoren (18) in einem Halter (11) angeordnet sind, der lösbar an einer Seitenwand des Hohlraums (8) befestigt werden kann.

3. Lagergehäuse mit einer Messvorrichtung nach Anspruch 2,
**dadurch gekennzeichnet, dass**
der Halter (11) eine erste Aussparung (14), die zur Aufnahme eines ersten der Schwingungssensoren angeordnet ist, und eine weitere Aussparung (17), die senkrecht zu der ersten Aussparung positioniert und zur Aufnahme eines zweiten Schwingungssensors angeordnet ist, aufweist, wobei die Aussparungen (14, 17) dazu dimensioniert und geformt sind, die Sensoren auf unbewegliche Weise festzuhalten.

4. Lagergehäuse mit einer Messvorrichtung nach Anspruch 2 oder 3,
**dadurch gekennzeichnet, dass**
der Halter (11) eine Aussparung (15) zur Aufnahme eines Kabels (12) zur Verbindung mit den externen Datenerfassungs- und/oder -verarbeitungsmitteln und eine Aussparung (16) für eine Leiterplatte (20), die zur Ansteuerung der Sensoren (18) angeordnet ist, aufweist.

5. Lagergehäuse mit einer Messvorrichtung nach Anspruch 4,
**dadurch gekennzeichnet, dass**
der Halter (11) eine parallelepipedische Struktur ist, die an einer Wand des Hohlraums (8) im Basisteil (2) des Lagergehäuses derart befestigt werden kann, dass die Schwingungssensoren (18) in Radial- und Axialrichtungen bezüglich des Lagergehäuses positioniert werden.

## Revendications

1. Logement de palier ayant une partie inférieure (1) avec une portion de base (2) et une partie supérieure pouvant être connectée à ladite partie inférieure, lesquelles parties inférieure et supérieure, dans une position interconnectée, formant ensemble un espace pour un siège interne (4) pour une bague de roulement externe d'un palier, et ayant un dispositif de mesure incorporant au moins deux capteurs de vibrations (18), prévus pour détecter les vibrations d'un arbre supporté à rotation dans un palier dans le logement de palier, lesquels capteurs de vibrations étant prévus pour détecter des vibrations dans deux directions perpendiculairement opposées et pour communiquer avec des moyens de collecte et/ou de traitement de données externes, laquelle partie inférieure (1) du logement de palier étant du type qui, pour des raisons de réduction de poids, est pourvu de cavités en retrait (7, 8, 9, 10) positionnées en dehors de l'espace formant le siège interne et ouvrant dans une direction à l'écart de l'espace interne,
**caractérisé en ce que**
les capteurs de vibrations (18) sont positionnés dans l'une de ces cavités en retrait (8) dans la partie inférieure (1) du logement de palier de manière complètement renfoncée.

2. Logement de palier comprenant un dispositif de mesure selon la revendication 1,
**caractérisé en ce que**
les capteurs de vibrations (18) sont agencés dans un dispositif de retenue (11) pouvant être attaché de manière amovible à une paroi latérale de ladite cavité (8)_{.}

3. Logement de palier comprenant un dispositif de mesure selon la revendication 2,
**caractérisé en ce que**
le dispositif de retenue (11) a un premier retrait (14) prévu pour recevoir un premier desdits capteurs de vibration et un retrait supplémentaire (17) positionné perpendiculairement au premier retrait et prévu pour recevoir un deuxième capteur de vibrations, lesdits retraits (14, 17) étant dimensionnés et formés de manière à retenir les capteurs de manière immobile.

4. Logement de palier comprenant un dispositif de mesure selon la revendication 2 ou 3,
**caractérisé en ce que**
le dispositif de retenue (11) a un retrait (15) pour recevoir un câble (12) destiné à communiquer avec lesdits moyens de collecte et/ou de traitement de données externes et un retrait (16) pour une carte à circuits imprimés (20) prévue pour commander les capteurs (18).

5. Logement de palier comprenant un dispositif de mesure selon la revendication 4,
**caractérisé en ce que**
le dispositif de retenue (11) est une structure parallélépipédique pouvant être attachée à un mur de ladite cavité (8) dans la portion de base (2) du logement de palier de manière à positionner les capteurs de vibrations (18) dans des directions radiale et axiale par rapport au logement de palier.
